Europäisches Patentamt

(19) European Patent Office

Office européen des brevets

(11) Publication number: **0 233 682**
**A2**

## (12) EUROPEAN PATENT APPLICATION

(21) Application number: **87300082.2**

(22) Date of filing: **07.01.87**

(51) Int. Cl.⁴: **G 06 F 15/16**

(30) Priority: **14.02.86 US 829303**

(43) Date of publication of application:
**26.08.87 Bulletin 87/35**

(84) Designated Contracting States: **DE FR GB IT**

(71) Applicant: **AMERICAN TELEPHONE AND TELEGRAPH COMPANY**
**550 Madison Avenue**
**New York, NY 10022 (US)**

(72) Inventor: **Day, James Francis**
**73 Tulip Lane**
**Colts Neck New Jersey 07722 (US)**

**Massi, Joseph Rosario**
**P.O. Box 204**
**Eatontown New Jersey 07738-0204 (US)**

**Shanks, Wesley Loren**
**59 Maple Avenue**
**Madison New Jersey 07940 (US)**

(74) Representative: **Watts, Christopher Malcolm Kelway, Dr. et al**
**Western Electric Company Limited 5, Mornington Road**
**Woodford Green Essex, IG8 0TU (GB)**

(54) Data network controller.

㊼ It is becoming increasingly popular for communication users to access a number of different computers, each running a different application program. These computers can be located locally or at remote locations and are thus accessible directly from the local PBX switch or via the public switching network. Under current dialing plans, the user must know the exact location of each application program in order to become connected therewith. There is disclosed a network controller (10) which contains the location and dialing plan (13) for each application accessible by each user. As programs are moved from location (3B5) to location (3B20), the information in the network controller is updated. Using this arrangement, a user need only communicate to the network controller the coded identity of the desired program, and the network controller thereupon establishes the desired connection and withdraws itself from the communication path.

FIG. 1

**Description**

DATA NETWORK CONTROLLER

Background of the Invention

This invention relates to a data communication network and more particularly to such a network where connections are established automatically to the proper data application.

In order to use a computer effectively, a user must have access to one or more application programs which serve to control the computer functions desired. In a very basic single user, single terminal system, these programs are typically stored on magnetic diskettes and physically loaded into the computer as desired. In slightly more sophisticated systems a hard disk is used and many programs may be permanently, or semi-permanently, stored on the disk and called upon from time to time by the user.

It takes little imagination to quickly realize the efficiency which results if the single user joins with many other users to share the same application programs. In fact, this is being done, and the programs which are shared are typically stored on one or more central, or host, computers. When the programs which are available to a given user are stored on more than one host computer, or stored in a number of different files on a single host computer, the user must remember the exact storage location (path from the user's computer to the desired program) of such programs so that they may be retrieved. This is cumbersome at best.

Problems become evident when it is realized that the available application programs may be "owned" by different users and thus may be moved from location to location. Even when the programs are controlled by an administrator, it is difficult to move them from place to place without extensive warnings and notifications to many people, all of whom may not be known to the administrator. In addition, when programs are available to a wide group of users, security becomes a problem in that unauthorized people can access the programs, even, unfortunately, when security passwords are used.

Summary of the Invention

The above-described problems have been overcome with a system which uses a programmable network controller interposed between each terminal and the central storage location or locations of the application programs. This network controller maintains a continuous record of the location of all, or a certain set of, such application programs and serves to direct a user to the proper program regardless of how often the program is moved.

In one embodiment, a communication switching system, such as AT&T System75, serves to connect a group of users to a group of host computers. When a user dials into the system, the network controller is interposed in the connection and, after interactively interrogating the user to determine the program, or programs desired checks its internal memory for the program location (e.g., an address or levels of addressing necessary to affect connection) and then establishes a connection to the desired application program in a selected host computer. The network controller then withdraws from the active communication path and is available to service other data connections. Since the user does not know the location or even the identity of the host computer, the opportunity for a breach of security is significantly reduced. The network controller will, in certain situations, terminate the original connection and call the use back to verify that the proper user terminal is being used for the connection.

Brief Description of the Drawing

These and other objects and features, together with the operation and utilization of the present invention, will be more apparent from the illustrative embodiment shown in conjunction with the drawing in which

FIGS.1 and 2 show block diagrams of the network controller,

FIG.3 shows a typical menu for presentation to a user, and

FIG.4 show a flowchart of system operation.

Detailed Description

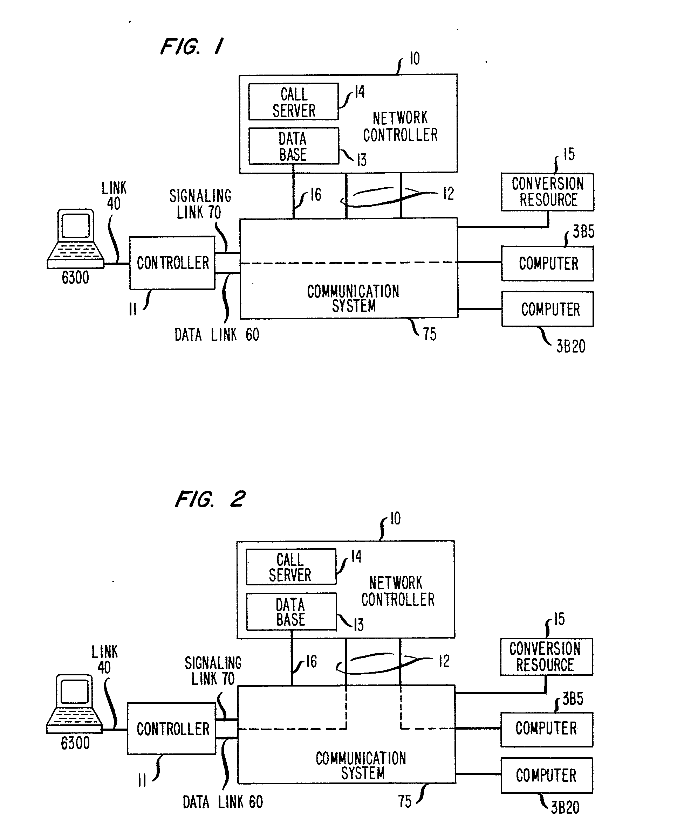

As shown in FIG.1, network controller10 is connected to a communication system, such as communication system75, which in turn is interposed between an intelligent workstation, such as personal computer (PC) 6300 and a host computer, such as computer3B5. Controller11 serves to expand link40 from PC6300 into a signaling link70 and a data link60 such as is shown in U.S. Patents 4,512,016 and 4,512,017. System75 can be any communication system, such as the system shown in U. S. Patent 4,389,720.

Signaling channel70 of link40 is used to send lamp and ringer update messages, text display information, and other information from the communication system to the communication instrument PC6300. This link is also used to send switch hook status, dialed digits, and other information to the communication system.

As shown in FIG.2, a user desiring to establish a data call will go off-hook at terminal PC6300 by turning on that terminal and using an originate button or other means. The user's controller11, using signaling link70, alerts communication system75 of the origination request and the system connects network controller10 to terminal PC6300. Network controller10 can be a stand-alone processor, such as an AT&T 3B2 or 3B5 computer, or can be built into communication system75 directly.

Simultaneously, communication system75, using link12 to network controller10, provides calling party (PC6300) identification to the network controller. Network controller10 then uses this information to first determine if login and/or password screening is necessary for the user of terminal PC6300. If such screening or authentication is necessary, network controller10 will prompt the user for a password or authorization code.

When the actual user is identified satisfactorily to network controller10, the network controller then determines if call-back is required. If call-back is required, network controller10 sends a message to switch75 to drop the connection from terminal PC6300 and also then sends a subsequent message to reestablish the connection to the terminal at an address previously stored in its user data base for the given user. This provision is most commonly envisioned for use with users calling into communication system75 from off-premises.

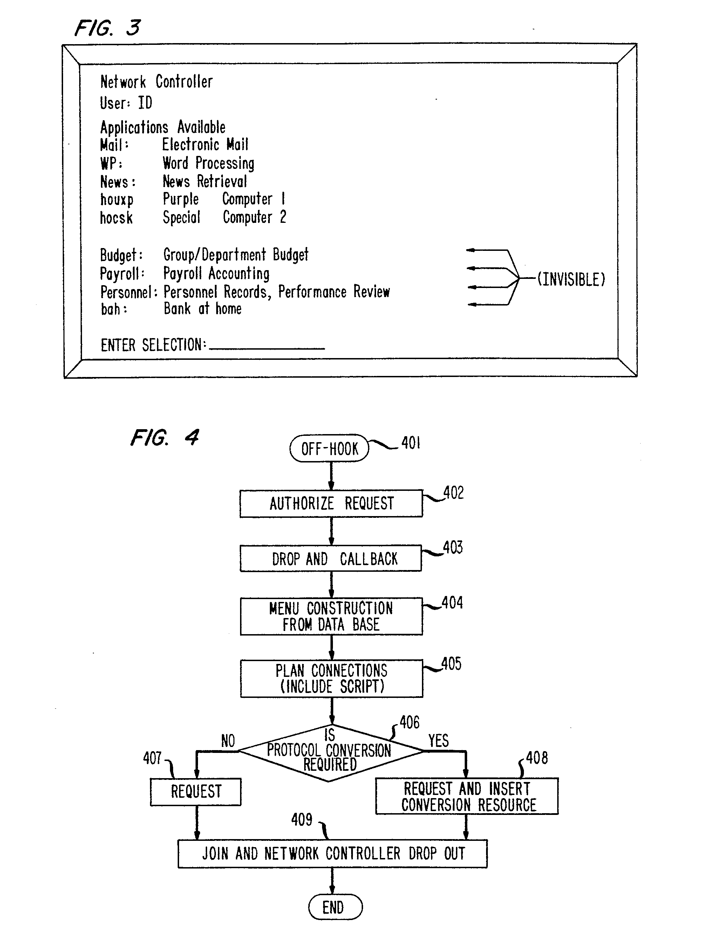

After network controller10 has a successfully identified the user, with or without the use of callback, the network controller generates an applications menu for presentation to the user's display screen. This menu could be, as shown in FIG3, a list of the applications that the user is authorized to access using the network controller, and is customized for each user, based on information stored in the network controller data base13. This menu is displayed for the user through a virtual terminal handler of the type commonly available. The system, which comprises the communication system and the network controller, is designed such that the network controller response time in downloading a menu to the user should be comparable to that for other data services, such as message center service or system administration.

Some or all of the items on the menu may be invisible to the user, that is, not displayed to the user but able to be specified and accessed. Invisibility may be used for applications requiring extra security or, more generally, in cases when the caller originates from a remote terminal. It should also be noted that the entire menu could be invisible with only questions presented to the user, such as "What application do you desire?".

The user selects an item from the menu either by typing a mnemonic for the selection or by placing the cursor on the desired applications and hitting ENTER (or another function key appropriate to the terminal being used). This function is typically controlled by a terminal handler (not shown). Network controller10 also allows users, as a shortcut for faster response, to interrupt menu presentation and to enter the mnemonic application name.

Given the user's selection, network controller10 accesses data base13 for the information needed to establish the call. The information includes network address (telephone number) and data characteristics of the terminal, such as asynchronous or synchronous, data rate and protocol. This information is passed to system75 for first establishing the connection to the desired host computer. This connection may be established through local or wide area data facilities. These facilities may be public or private digital or analog network. Network controller10 acts as an agent for the user by interacting with intermediate networks, as required in a data mode satisfactory to the intermediate networks, to complete the end-to-end connection. Once the host computer has become connected to the network controller, additional path information to the desired program may be downloaded to the connected host computer.

By appropriately programming the network controller and utilizing data base13, complex call set up sequences may be made transparent to the user. For establishing a network connection, the user's selection is mapped into a call set up sequence by network controller call server14. Network controller10 provides a consistent user interface and call progress information regardless of the facilities used so as to make transparent the user of intervening LANs and public or private data networks.

The network controller may also interact with the host computer at higher ISO/OSI levels by performing a scripted interaction. A scripted interaction may perform automatic login for the host computer on behalf of the user and invoke the selected application program. The presence/absence of scripting (beyond the addressing necessary for establishing a basic connection) is administratively controllable by the customer.

When the network controller has completed its interactions with the host computer it signals system75 and a connection between the user terminal and the host computer is established. At this point the network controller is withdrawn from the connection, allowing the user and the target application program and/or computer to interact directly.

A conversion resource15 may be inserted into the communications path if it is required to provide a connection between endpoints which otherwise could not communicate. One manner in which this is accomplished is shown in U.S. Patent 4,535,448, issued August13, 1985, which patent is hereby incorporated by reference herein. The need for conversion resource insertion is determined by the network controller based on the data communication characteristics of the originating terminal, the desired host computer and the application program selected. In the simplest form, the conversion resource will convert one set of commands to another set, or from one data communication language (protocol) to another, or from one speed to another speed.

FIG.4 shows the logical steps of a calling connection as just described.

The information in data base13 can be supplied by the user from terminal PC6300 over a data connection via system75, or from a computer system administrator, or from the computer directly. This communication can be, for example, on a separate data path16 from system75. One method of information retrieval from data base13 can be as shown in U.S. Patent 4,453,217, issued June5 1984, which patent is incorporated by reference herein, where the name of the desired program is used for retrieval purposes instead of the name of the desired party.

Conclusion

This concept of using a network controller is equally applicable to the Information Systems Network (ISN). The variety of wide area network paths to the target host could include circuit switched paths, packet switched paths and ISN VCS switched paths with the network controller being programmed to perform the network access and signaling. Also, it should be noted that, while the disclosure highlights the invention in terms of application programs, any resource whose location is changeable can be connected to the user in the manner described. The system may be used to direct a user to program whose name is unknown, but where the user can identify the function of the program.

**Claims**

1. A system for controlling communication linkages between a user at a calling terminal (6300) and specific programs resident on at least one computer (3B5, 3B20), said system comprising,
a communication switching system (75), and
a controller 10 having a data base (13),
CHARACTERIZED BY
means (10, 11, 14, 75) for connecting said controller through said communication switching system to said terminal on a temporary basis,
means (10, 13, 14) controlled by information contained in said data base and responsive to interactive data transfer between said terminal and said network controller for identifying a specific program, and
means (10, 13, 14, 406, 407, 408, 409, 405) further controlled by information in said data base for establishing an independent connection through said communication system between said terminal and said identified specific program resident on a computer identified by said data base.

2. The invention set forth in claim 1 further comprising means for terminating said connection between said terminal and said controller upon the establishment of said independent connection between said terminal and said specific program.

3. The invention set forth in claim 1 further comprising means independent from said connection between said terminal and said controller for changing said information in said data base.

4. The invention set forth in claim 1 further comprising means for converting data input in one form into data output in a second form, and means provided by said communication switching system and controlled by the data characteristics of a particular terminal and by the data characteristics of said specific program and by the data characteristics of intervening communication networks for inserting a proper one of said last-mentioned means in certain connections between said terminal and said identified specific program.

5. The invention set forth in claim 1 wherein said interactive data transfer is controlled by a menu provided to said user by said controller.

6. The invention set forth in claim 1 further comprising means controlled by said controller and responsive to said interactive data transfer for terminating said connecting between said terminal and said controller, and
means responsive to said termination for establishing a connection between said controller and a terminal identified from information contained in said data base, said contained information being associated with said interactive data transfer.

7. The invention set forth in claim 1 wherein said interactive transfer of information includes unique user identification data and wherein said establishment of said independent connection to a specific program includes the provision by said controller of said unique user identification data.

8. The invention set forth in claim 7 wherein said controller data base contains data segregated for each unique user and accessible for connection establishment purposes in response to receipt by said controller of said unique user identification data and accessible for data changing purposes by information provided over a connection to said controller from one of said computers.

9. A system for providing a computer user with access to a particular one of a plurality of programs stored in a computer, said system comprising
means operative for receiving from said user a description of a desired program,
a data base for storing path information pertaining to said program, said path information specific to each computer user,
means including a switched network operative for interpositioning said receiving means between each said user and said computer,
means including said data base for converting received ones of said descriptions into specific path information thereby controlling the connection through said switching network to said user of said desired program, and
means responsive to said connection of said desired program to said user for removing the connection from said user to said receiving means.

10. The invention set forth in claim 7 wherein said receiving means is shared in common with a plurality of said users.

11. The invention set forth in claim 10 wherein said receiving means includes means for accepting from said user data uniquely identifying said user, and means for communicating said data to said computer prior to the provision to said user of said desired program.

12. The invention set forth in claim 10 wherein said data base contains data segregated for each unique user and accessible for program provision purposes under control of information provided by said user when said receiving means is interpositioned between said user and said computer and accessible for data changing purpose over a linkage between said computer and said data base.

0233682

**FIG. 1**

**FIG. 2**

## FIG. 3

```
Network Controller
User: ID

Applications Available
Mail:      Electronic Mail
WP:        Word Processing
News:      News Retrieval
houxp      Purple    Computer 1
hocsk      Special   Computer 2

Budget:    Group/Department Budget
Payroll:   Payroll Accounting
Personnel: Personnel Records, Performance Review
bah:       Bank at home

ENTER SELECTION: _____
```

(INVISIBLE)

## FIG. 4

OFF-HOOK — 401

↓

AUTHORIZE REQUEST — 402

↓

DROP AND CALLBACK — 403

↓

MENU CONSTRUCTION FROM DATA BASE — 404

↓

PLAN CONNECTIONS (INCLUDE SCRIPT) — 405

↓

406 — IS PROTOCOL CONVERSION REQUIRED

NO → 407 — REQUEST

YES → 408 — REQUEST AND INSERT CONVERSION RESOURCE

↓

409 — JOIN AND NETWORK CONTROLLER DROP OUT

↓

END